Europäisches Patentamt

European Patent Office

Office européen des brevets

(11) Veröffentlichungsnummer: **0 364 914 B1**

# EUROPÄISCHE PATENTSCHRIFT

(45) Veröffentlichungstag der Patentschrift:
08.01.92 Patentblatt 92/02

(51) Int. Cl.⁵: **B23K 26/00, B23K 26/04**

(21) Anmeldenummer: **89119142.1**

(22) Anmeldetag: **14.10.89**

(54) Verfahren zur Ermittlung eines Durchschusszeitpunktes.

(30) Priorität: **21.10.88 DE 3835980**

(43) Veröffentlichungstag der Anmeldung:
**25.04.90 Patentblatt 90/17**

(45) Bekanntmachung des Hinweises auf die
Patenterteilung:
**08.01.92 Patentblatt 92/02**

(84) Benannte Vertragsstaaten:
**DE FR GB IT**

(56) Entgegenhaltungen:
**EP-A- 0 236 008**
**FR-A- 2 112 586**

(73) Patentinhaber: **MTU MOTOREN- UND TURBINEN-UNION MÜNCHEN GMBH**
**Dachauer Strasse 665 Postfach 50 06 40**
**W-8000 München 50 (DE)**

(72) Erfinder: **Reiter, Rolf, Dr.**
**Roseggerstrasse 9**
**W-8000 München 60 (DE)**
Erfinder: **Bayer, Erwin, Dr.**
**Ostenstrasse 36**
**8060 Dachau (DE)**
Erfinder: **Steinhauser, Ludwig**
**Karlstrasse 11**
**W-8031 Maisach (DE)**

## Beschreibung

Die Erfindung betrifft ein Verfahren zur Ermittlung eines Durchschußzeitpunktes bei der Fertigung von Bohrungen kleinen Durchmessers durch eine Abfolge von Laserimpulsen.

Das Laserimpulsbohrverfahren wird angewandt, um Bohrungen zu fertigen, deren Durchmesser außerordentlich gering, insbesondere geringer als 1 mm sind. Insbesondere Kühlluftsysteme von Turbinenschaufeln weisen eine Vielzahl derartig feiner Bohrungen auf, die sich mittels dieses Verfahrens automatisiert mit hoher Positioniergenauigkeit und geringen Toleranzen fertigen lassen.

Bei der Bearbeitung von Hohl-Werkstücken, beispielsweise in Form von Turbinenschaufeln, tritt jedoch das Problem auf, daß der Laser nach Fertigstellung der Bohrung, d.h. nach dem ersten Durchschuß abgestellt werden muß, um eine Beschädigung der Hinterwand oder anderer Teile im Inneren des Werkstückes zu vermeiden.

Bisher geschieht die Steuerung des Lasers dadurch, daß aufgrund von Erfahrungswerten bekannt ist, wie groß die Anzahl der erforderlichen Laserimpulse für eine bestimmte Bohrung ist. Die Anzahl ergibt sich empirisch aus der Wandstärke des verwendeten Werkstoffes sowie der eingestellten Laserenergie. Nachteilig bei diesem Verfahren ist jedoch, daß es durch Streuung der relevanten Parameter möglich ist, daß beispielsweise durch die vorgegebene Anzahl der Laserimpulse die Bohrung noch nicht fertiggestellt ist. Dies bedeutet, daß lediglich ein Sackloch gefertigt ist. Durch aufwendige Prüfmaßnahmen müssen daher alle gefertigten Bohrungen überprüft werden, ob die Wandung vollständig durchschlagen worden ist.

Andererseits ist es jedoch nicht zweckmäßig, die Impulszahl so groß zu wählen, daß mit Sicherheit eine vollständige Bohrung gefertigt worden ist. Diese Vorgehensweise hat den Nachteil, daß abhängig von der gewählten Sicherheit eine Anzahl Laserimpulse in den Hohlraum gehen oder gar die Rückwand treffen und dort eine Schwächung der Wandstärke und somit eine Beeinträchtigung der Betriebseigenschaften hervorrufen kann. Bei hoch belasteten Bauteilen, beispielsweise Turbinenschaufeln, ist die letztere Vorgehensweise nicht akzeptabel, wodurch der Fertigungsaufwand für die Erstellung von Kühlluftbohrungen außerordentlich groß ist.

Hiervon ausgehend ist es Aufgabe der vorliegenden Erfindung, ein Verfahren zur Ermittlung eines Durchschußzeitpunktes anzugeben, mittels dessen derjenige Laserimpuls feststellbar ist, der den Durchschuß durch die Werkstoffwandung vollbringt, und somit der Bohrvorgang abgebrochen werden kann.

Erfindungsgemäß wird diese Aufgabe durch die im Patentanspruch 1 gegebenen Merkmale gelöst. Vorteilhafte Weiterbildungen der Erfindung ergeben sich aus den Unteransprüchen 2 und 3.

Das erfindungsgemäße Verfahren hat den Vorteil, daß derjenige Laserimpuls feststellbar ist, der den Durchschuß durch das Werkstück vollbringt. Somit kann sofort der Laser abgeschaltet werden, so daß keine Laserschüsse in die Rückwand des bearbeiteten Werkstückes geleitet werden. Somit ist vorteilhafterweise einerseits eine Beschädigung der Hinterwand unterbunden, andererseits wird ebenfalls ausgeschlossen, daß der Bohrvorgang abgebrochen wird, bevor die Bohrung fertiggestellt ist. Hierdurch läßt sich eine wesentliche Verringerung des Fertigungsaufwandes, insbesondere des Prüfaufwandes beim Laserimpulsbohrverfahren erzielen.

Die Erfindung nutzt den überraschenderweise beobachteten Effekt, daß beim ersten Durchschuß ein deutlicher Abfall der Intensität des Leuchtfleckes auftritt, der auch beim zweiten und den folgenden Durchschüssen erhalten bleibt. Wird der Verlauf der Leuchtfleck-Intensität innerhalb der Impulsfolge verfolgt, so kann dieser deutliche Intensitätsabfall ermittelt und damit der Zeitpunkt des Durchschusses bestimmt werden.

Zur Bestimmung der Leuchtfleck-Intensität wird zunächst ein Bild der Bohrungsumgebung aufgezeichnet. Dies geschieht dadurch, daß mittels eines optischen Aufzeichnungsgerätes, beispielsweise einer Videokamera, durch einen halbdurchlässigen Spiegel in den Strahlengang des Lasers geblickt wird. Von jedem Laserimpuls wird ein Bild in Form eines Rasters aufgezeichnet. Die einzelnen Rasterpunkte werden anschließend ausgewertet.

Zur Bestimmung der Leuchtfleck-Intensität wird in einem ersten Schritt das Grauwerthistogramm berechnet und dann das akkumulierte Grauwertmaximum bestimmt. Unter Grauwert-Histogramm versteht man in diesem Zusammenhang die Häufigkeit des Auftretens der einzelnen diskreten Grauwerte eines Bildes oder eines Bildausschnittes in Prozent der Gesamtrasterpunkte. Das akkumulierte Grauwertmaximum ist das Integral (Fläche) über der Histogrammkurve, die der Leuchtfleckgröße entspricht. Das Integral ist dabei eine Zahl, die der Anzahl der Bildpunkt entspricht. Hierbei wird mit der Annahme, daß der Leuchtfleck deutlich heller ist als der Hintergrund von rechts ausgehend der Index desjenigen Grauwertes gesucht, bei dem das Integral der Histogrammkurve der Leuchtfleckfläche entspricht. Der so gebildete Helligkeitswert des Rasterbildes wird mit demjenigen des vorhergehenden Laserschusses verglichen, und untersucht, ob ein deutlicher Intensitätsabfall stattgefunden hat. Bei Bejahung wird ein Abbruchsignal an die Lasergerätsteuerung gegeben, so daß kein weiterer Laserimpuls in das Werkstück geschossen wird.

Die Erfindung wird nachfolgend anhand der beigefügten Abbildung näher erläutert. Es zeigt :

Fig. 1 : ein Rasterbild eines Laserschusses zur Fertigung der Bohrung,
Fig. 2 : die Abbildung eines Laserschusses nach Fertigstellung der Bohrung,
Fig. 3 : ein schematischen Diagramm des akkumulierten Grauwerthistogramms von Fig. 1,
Fig. 4 : ein schematisches Diagramm des akkumulierten Grauwerthistogramms von Fig. 2.

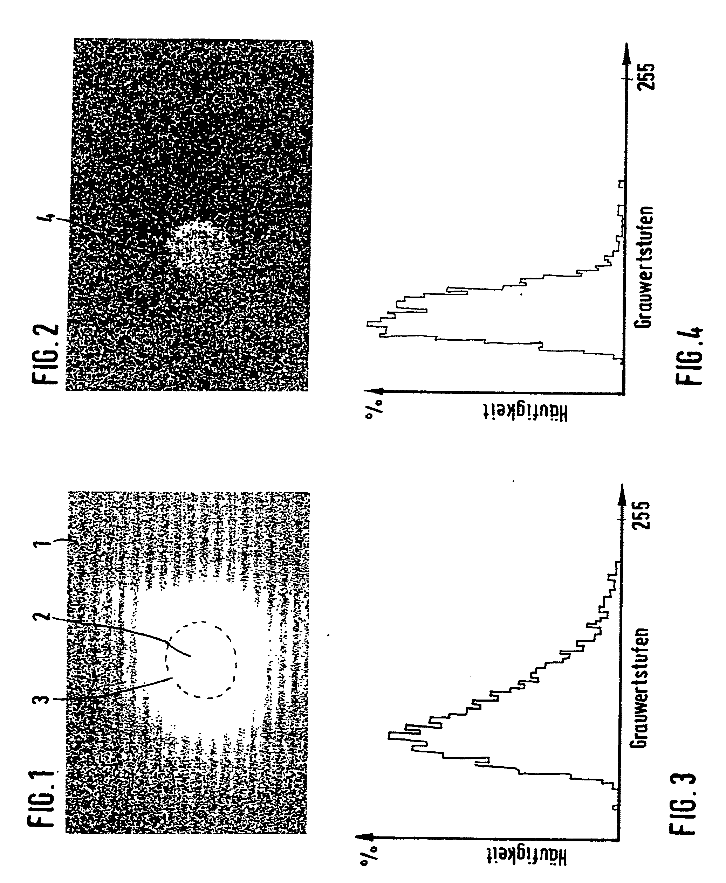

Fig. 1 stellt ein Rasterbild einer Werkstoffoberfläche 1 dar, die von dem Lichtblitz 2 eines Laserimpulses erleuchtet ist. Der Rand des Leuchtfleckes 2 weist dabei keine scharfen Konturen auf. Der Bohrungsrand der zu fertigenden Bohrung ist durch den gestrichelt eingezeichneten Kreis 3 angedeutet.

Das dargestellte Rasterbild ist einem der ersten Laserimpulse einer Bohrung zugeordnet, weil eine starke Überstrahlung der Bohrungskontur zu sehen ist. Bei jedem darauffolgenden Laserimpuls wird die Kontur des Leuchtfleckes 2 schärfer begrenzt sein und sich dem Bohrungsrand 3 anpassen. Gleichzeitig wird die Helligkeit innerhalb des Bohrungsrandes 3 nicht abnehmen. In Fig. 2 ist ein Abbild eines Laserimpulses dargestellt, der einem Laserschuß durch die fertige Bohrung in das dahinter liegende Material entspricht. Zu erkennen ist dabei der Leuchtfleck 4 mit relativ scharf begrenzter Kontur und geringer Helligkeit.

In Fig. 3 ist schematisch ein Grauwerthistogramm dargestellt.

Auf der Abszisse des dargestellten Diagrammes sind die Grauwerte dargestellt. Bei der gewählten Auflösung von 8 Bit sind 255 Grauwerte möglich. Die Ordinate gibt die Häufigkeit der auftretenden Grauwerte in Prozent an. Das dargestellte Grauwerthistogramm ist dem in Fig. 1 dargestellten Abbild eines Schusses in das zu bearbeitende Werkstück zugeordnet. Dabei ist erkennbar, daß eine relativ große Breite der Grauwerte auftritt, was mit einer starken Überstrahlung des Bohrungsrandes 3 gemäß Fig. 1 zu erklären ist.

Bei dem in Fig. 4 dargestellten Grauwerthistogramm handelt es sich um eines des in Fig. 2 dargestellten Bohrungsabbildes. Es ist die deutliche Eingrenzung der Bohrung gemäß Fig. 2 durch den eng begrenzten Bereich der Grauwerte in Fig. 4 zu erkennen. Beim ersten Durchschuß ändert sich das akkumulierte Grauwerthistogramm von dem in Fig. 3 dargestellten Verlauf schlagartig zu dem in Fig. 4 dargestellten Verlauf. Dieser Unterschied wird erfindungsgemäß detektiert und hieraus ein Signal zur Abschaltung des Lasers gewonnen.

**Patentansprüche**

1. Verfahren zur Ermittlung eines Durchschußzeitpunktes bei der Fertigung von Bohrungen kleinen Durchmessers durch eine Abfolge von Laserimpulsen, mittels eines durch einen halbdurchlässigen Spiegel im Laserstrahlengang auf die Bohrungsumgebung blickenden optischen Aufzeichnungsgerätes, mit folgenden Verfahrensschritten :
   a) ein Rasterbild des von der Bohrung und Umgebung reflektierten Laserlichtes wird während jedes Laserimpulses aufgezeichnet,
   b) die Häufigkeit des Auftretens der einzelnen Grauwertstufen wird anhand aller Rasterpunkte bestimmt (Grauwerthistogramm) und ein der Helligkeit des Bohrungsabbildes zugeordneter Helligkeitswert gebildet,
   c) der Helligkeitswert dieses Rasterbildes wird mit dem Helligkeitswert des dem vorhergehenden Laserschuß zugeordneten Rasterbildes verglichen,
   d) bei erheblichem Abfall des Helligkeitswertes wird ein Abbruchsignal an die Lasergerätsteuerung ausgegeben.

2. Verfahren nach Anspruch 1, dadurch gekennzeichnet, daß die Bildung des Helligkeitswertes dadurch erfolgt, daß aus dem Grauwerthistogramm von höheren Grauwertstufen (hell) gegenüber dem Bildhintergrund ausgehend derjenige Grauwert bestimmt wird, bei dem die Bohrungsfläche vom Hintergrund separiert wird.

3. Verfahren nach Anspruch 2, dadurch gekennzeichnet, daß zur Ermittlung der Bohrungsflächen-Rasterpunktzahl der Helligkeitswert aller Rasterpunkte mit einem Binarisierungs-Bezugswert verglichen wird, und die Anzahl der der Bohrung zugeordneten Rasterpunkte mit einer Helligkeit oberhalb des Binarisierung-Bezugswertes gespeichert wird.

**Revendications**

1. Procédé pour déterminer un instant de perçage lors de la réalisation de perçages de petits diamètres, par une succession d'impulsions laser, en regardant au moyen d'un appareil d'enregistrement optique l'environnement du perçage à travers un miroir semi-transparent selon la direction du faisceau laser, ce procédé comportant les étapes suivantes :
   a) une image tramée de la lumière laser réfléchie par le perçage et son environnement, est enregistrée pendant chaque impulsion laser,

b) la fréquence d'apparition des différents degrés de valeurs de gris, est déterminée à l'aide de tous les points de trame (histogramme des valeurs de gris) et une valeur de luminosité associée à la luminosité de l'image du perçage est formée,

c) la valeur de luminosité de cette image tramée est comparée avec la valeur de luminosité de l'image tramée associée au précédent tir laser,

d) lors d'une chute importante de la valeur de luminosité, un signal d'interruption est envoyé à la commande de l'appareil laser.

2. Procédé selon la revendication 1, caractérisé en ce que la formation de la valeur de luminosité résulte du fait qu'à partir de l'histogramme des valeurs de gris et en partant des degrés des valeurs de gris les plus élevés (clairs) par rapport à l'arrière plan de l'image, on détermine la valeur de gris pour laquelle la surface du perçage est séparée de l'arrière plan.

3. Procédé selon la revendication 2, caractérisé en ce que pour déterminer le nombre de points de trame de la surface du perçage, la valeur de luminosité de tous les points de trame est comparée avec une valeur de référence de binairisation, et le nombre de points de trame associés au perçage et comportant une luminosité au-dessus de la valeur de référence de binairisation, est mémorisé.

## Claims

1. Process for determining a drilling instance in the production of small diameter bores by a series of laser pulses, by means of an optical recording apparatus which views through a semi-permeable mirror in the laser beam path onto the surrounding area of the bore, with the following process steps :

a) a screen image of the laser light reflected by the bore and surrounding area is recorded during each laser pulse ;

b) the frequency of the occurrence of the individual half-tone stages is determined by means of all the picture points (half-tone histogram) and a brightness value associated with the brightness of the bore image is formed ;

c) the brightness value of this screen image is compared with the brightness value of the screen image associated with the previous laser shot ; and

d) if there is a considerable drop in the brightness value, a termination signal is emitted to the laser apparatus control device.

2. Process according to Claim 1, characterised in that the brightness value is formed in that from the half-tone histogram of higher half-tone stages (bright) relative to the image background that half-tone is determined in the case of which the bore surface is separated from the background.

3. Process according to Claim 2, characterised in that in order to determine the bore surface-picture point number the brightness value of all picture points is compared with a binary reference value and the number of picture points associated with the bore with a brightness value above the binary reference value is stored.

FIG.1

FIG.2

FIG.3

FIG.4

EP 0 364 914 B1